Europäisches Patentamt

European Patent Office

Office européen des brevets

(19)

(11) Veröffentlichungsnummer: **0 292 649**

**A1**

(12) # EUROPÄISCHE PATENTANMELDUNG

(21) Anmeldenummer: 88102908.6

(51) Int. Cl.⁴: **A47J 31/047**

(22) Anmeldetag: 26.02.88

(30) Priorität: 26.05.87 DE 3717678

(43) Veröffentlichungstag der Anmeldung:
30.11.88 Patentblatt 88/48

(84) Benannte Vertragsstaaten:
CH FR GB IT LI NL SE

(71) Anmelder: **ROBERT KRUPS STIFTUNG & CO.
KG.**
**Heresbachstrasse 29**
**D-5650 Solingen 19(DE)**

(72) Erfinder: **Henn, Stefan**
**Wieden 29,**
**D-5650 Solingen(DE)**

(74) Vertreter: **Buse, Karl Georg, Dipl.-Phys. et al**
**Patentanwälte Dipl.-Phys. Buse Dipl.-Phys.
Mentzel Dipl.-Ing. Ludewig Unterdörnen 114
D-5600 Wuppertal 2(DE)**

(54) **Haushaltgerät zum Bereiten von Tee.**

(57) Es handelt sich um ein Haushaltgerät zum Bereiten von Tee mit einem wenigstens eine Heizeinrichtung aufweisenden, mit einem Deckel versehenen Aufnahmebehälter (17) für Frischwasser und mit einem Ziehbehälter (34). Der Ziehbehälter weist eine Aufnahme für den Tee auf und ist durch einen weiteren Deckel verschließbar. Der Aufnahmebehälter und der Ziehbehälter sind durch ein Steigrohr (30) miteinander verbunden und es ist eine Abflußeinrichtung für den fertig zubereiteten Tee vorhanden. Das Steigrohr ist zwischen dem Aufnahmebehälter und dem Ziehbehälter verschiebbar angeordnet. Im Aufnahmebehälter verbleibt in Abhängigkeit von der Lage der Unterkante des Steigrohres zum Boden des Aufnahmebehälters eine unterschiedliche Restmenge von Wasser. Die Verdampfzeit dieser Restmenge von Wasser bestimmt die Ziehzeit des zu bereitenden Tees. Bei der bevorzugten Ausführungsform bildet das Steigrohr zugleich die Abflußeinrichtung.

EP 0 292 649 A1

## Haushaltgerät zum Bereiten von Tee

Die Erfindung bezieht sich auf ein Haushaltgerät zum Bereiten von Tee mit einem wenigstens eine Heizeinrichtung aufweisenden, mit einem Deckel versehenen Aufnahmebehälter für Frischwasser und mit einem Ziehbehälter, der eine Aufnahme für den Tee aufweist und durch einen weiteren Deckel verschließbar ist, wobei Aufnahmebehälter und Ziehbehälter durch ein Steigrohr miteinander verbunden sind und mit einer Abflußeinrichtung für den fertig zubereiteten Tee.

Durch die DE-OS 2 428 165 ist ein Haushaltgerät dieser Art bekanntgeworden, mit dem außer Kaffee auch Tee zubereitet werden kann. Dabei ist der Aufnahmebehälter für Frischwasser druckfest ausgebildet und hat im Bereich seines Bodens eine elektrische Heizeinrichtung. Oberhalb des Frischwasserbehälters befindet sich ein aromadicht verschließbares Brühgefäß, das einen ersten Aufnahmeraum für das Brühwasser und einen zweiten Aufnahmeraum für das Kaffeepulver od.dgl. aufweist. Am Boden des ersten Aufnahmeraumes ist eine Sperrvorrichtung in Form eines Magnetventils angebracht, die das fertige Kaffeegetränk zunächst am Abfluß hindert. Der Aufnahmebehälter für das Frischwasser und der Ziehbehälter bzw. die Brühvorrichtung sind durch ein Steigrohr miteinander verbunden. Die eine Öffnung dieses Steigrohres liegt im Bereich des Bodens des Frisch wasserbehälters und damit im Bereich der dort angeordneten elektrischen Heizung. Das Steigrohr durchdringt den Boden des Ziehbehälters, der bereichsweise zugleich den Deckel für den Frischwasserbehälter bildet. Das obere Ende des Steigrohres ist im Ziehbehälter angeordnet und zwar in Nähe des abnehmbaren Deckels desselben. Beim bestimmungsgemäßen Gebrauch dieses bekannten Haushaltgerätes wird mittels der elektrischen Heizeinrihtung das Frischwasser in dem Aufnahmebehälter zum Kochen gebracht. Das kochende Wasser wird durch Eigendruck aus dem Frischwasserbehälter durch das Steigrohr in den oberhalb des Frischwasserbehälters liegenden Ziehbehälter gefördert und kommt mit dem dort vorhandenen Kaffeemehl oder gegebenenfalls mit dem Tee in Wirkverbindung. Das Einwirken des heißen Wassers auf das Kaffeemehl oder auf den Tee erfolgt so lange, wie es der Benutzer wünscht. Zu diesem Zweck ist eine Zeitschaltuhr vorgesehen. Nach dem Ablauf der eingestellten Zeit wird das Magnetventil im Boden des Ziehbehälters geöffnet. Dadurch kann das fertig zubereitete Getränk in eine darunter befindliche Auffangkanne od.dgl. abfließen. Bei dieser bekannten Ausführungsform ist ein sehr lang bemessenes Steigrohr erforderlich, das vom Boden des Frischwasserbehälters bis in Nähe des Deckels des Ziehbehälters reicht. Das Steigrohr ist dabei ortsfest im Deckel des Frischwasserbehälters bzw. im Boden des Ziehbehälters angeordnet und daher eine Verschiebung nicht möglich. Es ist auch eine verhältnismäßig aufwendige Einrichtung zum Sperren und Öffnen des Abflusses des Ziehbehälters erforderlich, die eine Zeitschaltuhr und ein Magnetventil einschließt.

Durch die DE-PS 686 482 ist eine Vorrichtung zum Herstellen heißer Getränke, wie Kaffee, Tee od.dgl. bekanntgeworden. Bei dieser bekannten Vorrichtung sind drei Gefäße übereinander angeordnet und zwar ein Heißwasserbereiter mit einem Heizgürtel, einem Heizmittelschalter und einem Ablaßventil. Darunter liegt ein Brühbehälter mit einem durch ein Ablaßventil absperrbaren Filter, und darunter schließlich ist ein Auffang- oder Ausschankbehälter ange ordnet. Durch die Verwendung von drei übereinander angeordneten Gefäßen ergibt sich eine sehr große Bauhöhe für diese bekannte Vorrichtung zum Herstellen heißer Getränke, wie Kaffee, Tee od.dgl. Darüber hinaus ist jedem der beiden oberen Behälter eine eigene steuerbare Ablaßeinrichtung zugeordnet, durch die die Herstellung derartiger Vorrichtungen erheblich verteuert wird. zumal dazu noch Zeitschalter od.dgl. hinzukommen.

Eine wesentlich verbesserte Ausführungsform einer aus drei übereinander angeordneten Gefäßen bestehenden Vorrichtung zum Bereiten von Tee ist durch die DE-PS 3 312 354 bekanntgeworden. Dieses Haushaltgerät hat einen eine Heizeinrichtung aufweisenden und mit einem Deckel versehenen Wasserbehälter, der einen über einen Ziehbehälter mündenden, mit einer steuerbaren Ablaßeinrichtung versehenen Auslauf aufweist. Der das Brühgut aufnahmende Ziehbehälter hat ebenfalls einen Abfluß, aus welchem die Brühflüssigkeit in einen unterhalb des Ziehbehälters angeordneten Getränkesammelbehälter abfließt. Dabei ist die Ablaßeinrichtung von einem Saughebersteigrohr gebildet, und der Abfluß des Ziehbehälters ist mit ein zeitabhängig offensteuerbares Ventilglied verschlossen. Auch dieses bekannte Haushaltgerät zum Bereiten von Tee hat noch eine beachtliche Bauhöhe, weil wiederum drei übereinander angeordnete Behälter mit steuerbaren Ablaßeinrichtungen vorhanden sind. Diese Steuereinrichtungen sind verhältnismäßig teuer, weil in aller Regel zur Steuerung des Ventilgliedes eine elektronisch regelbare Steuereinheit vorgesehen ist.

Der Erfindung liegt die Aufgabe zugrunde, Haushaltgeräte zum Bereiten von Tee der eingangs näher gekennzeichneten Art weiter zu verbessern, insbesondere derart, daß das Haushaltgerät im Vergleich mit dem Bekannten eine wesentlich niedrigere Bauhöhe erhält und daß auf die Verwendung verhältnismäßig kostspieliger elektrischer oder elektronischer Steuereinrichtungen verzichtet wird.

Zur Lösung dieser Aufgabe wird erfindungsgemäß vorgeschlagen, daß das Steigrohr zwischen dem Aufnahmebehälter und dem Ziehbehälter verschiebbar angeordnet ist und daß im Aufnahmebehälter in Abhängigkeit von der Lage der Unterkante des Steigrohres zum Boden des Aufnahmebehälters eine unterschiedliche Restmenge von Wasser verbleibt, deren Verdampfzeit die Ziehzeit des zu bereitenden Tees bestimmt und daß das Steigrohr vorzugsweise zugleich die Abflußeinrichtung bildet.

Die erfindungsgemäße Ausbildung eines Haushaltgerätes zum Bereiten von Tee hat gegenüber dem Bekannten erhebliche Vorteile. Zunächst reduziert sich die Bauhöhe des Haushaltgerätes erheblich, weil statt der bisherigen drei nur noch zwei Behälter übereinander angeordnet werden, obwohl die Ziehzeit des Tees den Wünschen des Benutzers des Haushaltgerätes entsprechend eingestellt werden kann. Erstmalig wird jedoch zur Regelung der Ziehzeit die Restmenge des zu verdampfenden Wassers eingesetzt, so daß auf die Verwendung von elektronischen oder elektrischen oder auch mechanischen Einrichtungen ganz verzichtet werden kann. Hierdurch können die Herstellungskosten für das Haushaltgerät erheblich gesenkt werden. Die Anpassung der gewünschten Ziehzeit an die Wünsche des Benutzers erfolgt in einfacher Weise dadurch, daß er die Lage des Steigrohres innerhalb des Aufnahmebehälters bzw. des Ziehbehälters verändert. Je nach Lage des Steigrohres ist dann die im Bereich des Bodens des Aufnahmebehälters verbleibende Restwassermenge unterschiedlich, so daß damit auch die Ziehzeit verändert wird, weil die Zeit zum Verdampfen der Restwassermenge variiert. Eine besonders einfache und daher wohlfeile Ausführung erreicht man, wenn man das Steigrohr zugleich auch als Abflußeinrichtung benutzt. Dies bedeutet, daß die unter dem Dampfdruck des kochenden Wassers zunächst in dem oberen Behälter überführte Flüssigkeit nach einer einstellbaren Ziehzeit, nämlich nach dem Verdampfen der jeweils vorhandenen Restwassermenge, wieder durch das Steigrohr hindurch in den Aufnahmebehälter zurückströmen kann. Somit wird dort das fertige Getränk angesammelt. Aus diesem Behälter kann anschließend das Verteilen des fertig zubereiteten Tees erfolgen.

Bei der bevorzugten Ausführungsform der Erfindung ist vorgesehen, das Steigrohr in einem beidseitig offenen Rohrabschnitt des Bodens des Ziehbehälters verschiebbar zu lagern. Dabei ist das Steigrohr selbst zweckmäßig ein gerader Rohrabschnitt mit kreisförmigem Querschnitt und mit je einer Öffnung an den Enden.

Dabei ist es vorteilhaft, das Steigrohr unter Zwischenschaltung eines Halte- und Dichtringes an den Innenwandungen des Rohrabschnitts verschiebbar zu lagern. Bei dieser Gestaltung ist mit einfachsten Mitteln eine Verschiebbarkeit des Steigrohres erreicht.

Es empfiehlt sich, das obere Ende des Steigrohres in eine Hülse des im Ziehbehälter herausnehmbar angeordneten Teesiebes eingreifen zu lassen. Dabei weist die Hülse zweckmäßig eine obere Abschlußwand auf und umgreift mit ihrem rückwärtigen, erweiterten Bereich den aufrechten Rohrabschnitt des Teesiebes unter Freilassung eines Ringspaltes.

Die Oberkante des Steigrohres ist zweckmäß der genannten Abschlußwand der Hülse benachbart und das Steigrohr hat eine innerhalb des Aufnahmebehälters liegende Öffnung in ihrer Umfangswand. Durch die letztgenannte Öffnung kann beim Inbetriebnehmen des Haushaltgerätes schon der erste im Aufnahmebehälter sich bildende Dampf im Steigrohr entweichen.

Nach einem weiteren Vorschlag der Erfindung weist die Hülse des Teesiebes im Bereich des Bodens des Ziehbehälters einen senkrecht zur Hülse angeordneten und mit einer Vielzahl von Löchern versehenen Boden auf, der unter Bildung eines Aufnahmeraumes in einen abgewinkelten, umlaufenden Rand übergeht. In diesen Aufnahmeraum können in einfacher Weise die Teeblätter hineingebracht werden, damit sie mit dem kochenden Wasser in Wirkverbindung kommen. Es steht damit nicht nur ein sehr großer Aufnahmeraum für die Teeblätter zur Verfügung, was sich für das Auslaugen der Teeblätter vorteilhaft auswirkt, sondern die Beschickung dieses Aufnahmeraumes ist wegen der großen Öffnung einfach.

Zweckmäßig bildet der Boden des Ziehbehälters zugleich den Deckel für den Aufnahmebehälter. Auf diese Weise kann ein besonderer - also zusätzlicher - Deckel für den Aufnahmebehälter eingespart werden. Im übrigen ist der Deckel für den Ziehbehälter so beschaffen, daß er bei Bedarf auch auf das Gehäuse des Haushaltgerätes aufgesetzt werden kann und dadurch den Aufnahmebehälter im Gehäuse abdeckt. Dabei ist es vorteilhaft, wenn der Boden des Ziehbehälters einen angeformten Befestigungsbereich aufweist, der einen Vorsprung erfaßt, der mit einem Gegenvorsprung des Gehäuses des Haushaltgerätes bajonettverschlußartig zusammenwirkt.

Bei der bevorzugten Ausführungsform der Erfindung weist der Aufnahmebehälter einen sich aus einem oberen und einem unteren Bereich zusammensetzenden Aufnahmeraum auf, wobei die im unteren Aufnahmeraum verbleibende Restmenge des zu verdampfenden Wassers die Ziehzeit des Tees bestimmt.

Dabei empfiehlt es sich, den oberen Aufnahmeraum einen Durchmesser aufweisen zu lassen, der etwa dem des Gehäuses des Haushaltgerätes entspricht, während der untere, zentral im Gehäuse liegende Aufnahmeraum durchmessermäßig um ein Vielfaches kleiner ist und unterhalb des Bodens des Aufnahmeraumes liegt. Bei dieser Ausbildung verbleibt in dem unteren Aufnahmeraum eine verhältnismäßig geringe Restwassermenge, also eine solche mit geringem Volumen, was sich auf das Einhalten der Genauigkeit der Ziehzeit vorteilhaft auswirkt.

Es empfiehlt sich, jedem Aufnahmeraum des Aufnahmebehälters eine separate Heizung zuzuordnen, wobei die dem oberen Aufnahmeraum zugeordnete Heizung eine um ein Vielfaches höhere Leistung als die dem unteren Aufnahmeraum zugeordnete Heizung hat. Damit wird der Tatsache Rechnung getragen, daß sich im oberen Aufnahmeraum eine weitaus größere Wassermenge befindet als im unteren Aufnahmeraum.

Es empfiehlt sich, wenigstens der größeren der beiden Heizungen einen wiedereinrückbaren Thermostat zuzuordnen.

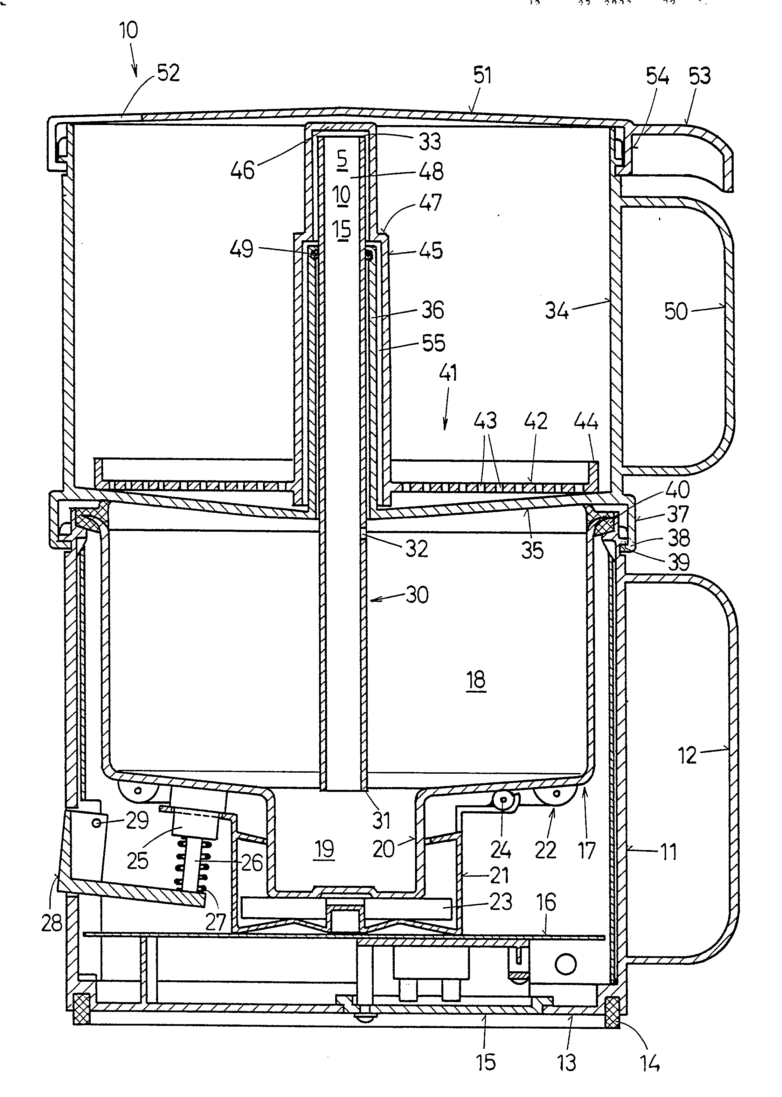

Auf der Zeichnung ist die Erfindung in einem Ausführungsbeispiel dargestellt und zwar zeigt die einzige Figur

einen Längsschnitt durch ein erfindungsgemäß ausgebildetes Haushaltgerät zum Bereiten von Tee.

Es sei zunächst erwähnt, daß in der einzigen Figur der Zeichnung nur diejenigen Teile eines Haushaltgerätes zum Bereiten von Tee dargestellt sind, welche für das Verständnis der Erfindung von Bedeutung sind. So fehlen insbesondere die elektrischen Zuleitungen zu den Heizungen und auch einige der Schalt-, Regel- und Steuereinrichtungen. Im übrigen können alle fehlenden, also in der Zeichnung nicht dargestellten Teile eine bekannte Ausbildung haben und in ebenfalls bekannter Weise mit den zeichnerisch erfaßten Teilen zusammenwirken.

Das Haushaltgerät zum Bereiten von Tee - im nachfolgenden kurz Teeautomat genannt - ist generell mit 10 bezeichnet. Der Teeautomat 10 hat ein Gehäuse 11, welches im wesentlichen als Hohlzylinder ausgebildet ist, dessen untere Seite durch einen Boden 13 verschlossen ist und an dessen Umfangsfläche ein Handgriff 12 angebracht ist. In einem verdickten, nicht näher bezeichneten Bereich des Bodens 13 ist eine Nut eingearbeitet, in welcher ein Aufstellelement, beispielsweise ein Ring 14 angeordnet ist. Im Bedarfsfall kann dieses Aufstellelement 14 auch in einzelne Aufstellfüße unterteilt sein. Im Boden 13 befindet sich eine herausnehmbare Verschlußplatte 15, die es ermöglicht, an die im Inneren des Gehäuses 11 liegenden Teile des Haushaltgerätes zu gelangen. Parallel zum Boden 13 des Gehäuses 11 ist im Inneren des Gehäuses ein Zwischenboden 16 angeordnet, der sich im wesentlichen über den gesamten Durchmesser des Gehäuses 11 erstreckt. Durch den Zwischenboden 16 ist eine nicht näher bezeichnete untere Kammer geschaffen, in der elektrische Einrichtungen untergebracht werden können.

Oberhalb des Zwischenbodens 16 ist im Gehäuse 11 des Teeautomaten 10 ein generell mit 17 bezeichneter Aufnahmebehälter angeordnet. Der Aufnahmebehälter 17 weist einen sich aus einem oberen und unteren Bereich zusammensetzenden Aufnahmeraum auf, wobei der obere - größere - Bereich mit 18 und der untere - kleinere - mit 19 bezeichnet ist. Die im unteren Aufnahmeraum 19 verbleibende Restmenge des zu verdampfenden Wassers bestimmt die Ziehzeit des Tees. Aus der einzigen Figur der Zeichnung ist zu ersehen, daß der obere Aufnahmeraum 18 einen Durchmesser aufweist, der etwa dem des Gehäuses 11 des Teeautomaten 10 entspricht, während der untere, zentral im Gehäuse 11 liegende Aufnahmeraum 19 durchmessermäßig um ein Vielfaches kleiner ist und unterhalb des Bodens des Aufnahmeraumes 18 liegt. Die umlaufenden Begrenzungswandungen des unteren Aufnahmeraumes 19 sind mit 20 bezeichnet. Der obere - größere - Aufnahmeraum 18 entspricht in seinem Volumen im wesentlichen der maximalen Tassenzahl, während der volumenmäßig kleinere Aufnahmeraum 19 die Ziehziet bestimmt, weil die dort verbleibende Restwassermenge verdampft werden muß. Im gewählten Ausführungsbeispiel hat das Steigrohr 30 seine oberste Stellung. Dies bedeutet, daß die gesamte Wassermenge des Aufnahmeraumes 19 verdampft werden muß.

Dem Aufnahmeraum 18 ist eine I. Heizung 22 zugeordnet, die eine große Leistung, z.B. 800 Watt, hat, während dem unteren Aufnahmeraum 19 eine II. Heizung 23 zugeordnet ist, die wesentlich leistungsschwächer ist und beispielsweise nur 40 Watt aufnimmt. Mit 24 ist eine bekannte Brandsicherung und mit 25 ein einrückbarer Thermostat ebenfalls bekannter Bauart bezeichnet. Zur Halterung des Thermostaten 25, der Brandsicherung 24 und der II. Heizung 23 dient eine genrell mit 21 bezeichnete Halteklammer, die auf dem Zwischenboden 16 anliegt. Gegebenenfalls könnte auch der II. Heizung 23 ein eigener Thermostat zugeordnet werden.

Zum Thermostat 25 gehört ein aus seinem Gehäuse herausragender Stift 26, der von einer Feder 27 umgeben wird, deren eines Ende sich am Gehäuse des Thermostaten 25 und deren anderes Ende sich an einem schwenkbar gelagerten Betätiger 28 abstützt. Zur schwenkbaren Halterung des Betätigers 28 am Gehäuse 11 dient im gewählten Ausführungsbeispiel ein Lagerstift 29. Der Betätiger 28 ragt mit seinem vorderen freien Ende teilweise aus dem Gehäuse 11 heraus, so daß er vom Benutzer erfaßt werden kann.

Der Aufnahmebehälter 17 wird an seiner oberen offenen Seite durch den Boden 35 eines Ziehbehälters 34 hermetisch abgeschlossen. Zu diesem Zweck weist der Boden 35 des Ziehbehälters einen angeformten Befestigungsbereich 37 auf, der einen Vorsprung 38 umfaßt, welcher seinerseits mit einem Gegenvorsprung 39 des Gehäuses 11 des Teeautomaten bajonettverschlußartig zusammenwirkt. Mit 40 ist dabei eine Dichtung bezeichnet, die ringförmig gestaltet ist und deren oberer, dichtlippenartiger Bereich mit der Unterseite des Bodens 35 des Ziehbehälters 34 zusammenwirkt.

Der Ziehbehälter 34, der volumenmäßig im wesentlichen dem Aufnahmebehälter 17 entspricht und wie dieser als einseitig offener Hohlzylinder ausgebildet ist, wird mit einem Deckel 51 verschlossen. Dieser Deckel 51 paßt mit seinem bajonettverschlußartigen Randbereich zugleich auch auf das Gehäuse 11 des Teeautomaten 10. Wie die Zeichnung erkennen läßt, hat der Deckel 51 eine an seinem Rande liegende Ausgußöffnung 52. Zur Erleichterung der Bedienung hat der Ziehbehälter 34 eine ihm angeformte Handhabe 50. Der Deckel 51 weist einen Befestigungsrand 54 auf, der den einen Teil der erwähnten bajonettverschlußartigen Verbindung bildet, deren anderer Teil der Außenfläche des Ziehbehälters 34 unmittelbar angeformt ist. Der Deckel 51 des Ziehbehälters 34 hat ebenfalls eine Handhabe 53, die ihm zweckmäßig angeformt ist, was die Herstellung erleichtert.

Zu dem erfindungsgemäßen Teeautomaten 10 gehört ein Steigrohr 30, welches zwischen dem Aufnahmebehälter 17 und dem Ziehbehälter 34 verschiebbar angeordnet ist. Das Steigrohr 30 ist im gewählten Ausführungsbeispiel als beidseitig offenes, gerades Rohr gestaltet. Die Unterkante des Steigrohres 30 ist dabei mit 31 bezeichnet. Die Lage der Unterkante 31 oder allgemein die Lage des Steigrohres 30 kann vom Benutzer verändert werden. Dies bedeutet, daß die Unterkante 31 des Steigrohres 30 im bezug auf den Boden des unteren Aufnahmeraumes 19 eine unterschiedliche Lage einnehmen kann. Beim Betrieb des erfindungsgemäßen Teeautomaten verbleibt somit in dem Aufnahmeraum 19 eine unterschiedliche Restmenge von Wasser. Dabei bestimmt die Verdampfzeit dieser Restmenge die Ziehzeit des zu bereitenden Tees.

Im gewählten Ausführungsbeispiel ist das Steigrohr 30 in einem beidseitig offenen Rohrabschnitt 36 den Bodens 35 des Ziehbehälters 34 verschiebbar gelagert. Das Steigrohr 30 wird dabei in seiner jeweiligen Lage durch einen Halte- und Dichtungsring 49 festgelegt, der in einer nicht näher bezeichneten nutenartigen Vertiefung des aufrechten Rohrabschnittes 36 angeordnet ist und der etwas aus dieser nutenartigen Vertiefung vorsteht, so daß ein Zusammenwirken mit der benachbarten Außenfläche des Steigrohres 30 erfolgen kann. Um dabei dem Benutzer des Teeautomaten 10 die Einstellung zu erleichtern, ist das Steigrohr 30 in seinem oberen Bereich mit einer Skala 48 versehen. Im dargestellten Ausführungsbeispiel gibt die Skala 48 die Ziehzeit in Minuten an. Natürlich sind auch andere Skaleneintragungen oder auch eine Feineinstellung möglich.

Das obere, die Skala 48 aufweisende Ende des Steigrohres 30 ragt in eine Hülse 45 des im Ziehbehälter 34 herausnehmbar angeordneten Teesiebes 41 hinein. Die mit 33 bezeichnete Oberkante des Steigrohres 30 liegt bei der dargestellten Lage des Steigrohres 30 mit geringem Abstand von einer oberen Abschlußwand 46 der Hülse 45. Dies ist die oberste Lage der Oberkante 33 des Steigrohres 30. Von dieser Lage aus ist ein Verschieben des Steigrohres 30 nach unten möglich. Dadurch entfernt sich einerseits die Oberkante 33 von der Abschlußwand und andererseits taucht die Unterkante 31 tiefer in den unteren Aufnahmeraum 19 ein.

Der untere, durchmessermäßig erweiterte Bereich der Hülse 45 umgreift den aufrechten Rohrabschnitt 36 des Teesiebes 41 unter Freilassung eines Ringspaltes 55. Bei einer solchen Ausgestaltung kann das im Steigrohr 30 nach oben beförderte heiße Wasser aus der oberen Öffnung des Steigrohres 30 heraustreten und durch den Ringspalt 55 hindurch in den Ziehbehälter 34 gelangen. Wie die Figur der Zeichnung erkennen läßt, ist unmittelbar unterhalb des Bodens 35 des Ziehbehälters 34 in der Umfangsfläche des Steigrohres 30 eine Öffnung 32 angebracht. Durch diese Öffnung 32 kann zu Beginn der Teezubereitung der Heißdampf aus dem Aufnahmebehälter 17 entweichen.

Die Hülse 45 des Teesiebes 41 geht im Bereich des Bodens 35 des Ziehbehälters 34 in einen senkrecht zur Hülse 45 angeordneten und mit einer Vielzahl von Löchern 43 versehenen Boden 42 über. Dieser Boden 42 wird durch einen umlaufenden, nach oben abgewinkelten Rand 44 begrenzt. Es entsteht somit ein großer, nach oben hin offener Aufnahmeraum zur Unterbringung des Tees. Der Durchmesser des Bodens 42 ist etwas kleiner gehalten als der des Ziehbehälters 34.

Das erfindungsgemäße Haushaltgerät zum Bereiten von Tee arbeitet wie folgt:

Es wird Frischwasser in der gewünschten, der herzustellenden Tassenzahl von Tee entsprechende Menge in den noch offenen Aufnahmebehälter 17 eingefüllt. Im Anschluß daran wird unter Verwendung der Skala 48 des Steigrohr 30 in die gewünschte Lage überführt, die der Ziehzeit entspricht. Anschließend wird der Ziehbehälter 34 auf das Gefäß 11 aufgesetzt und mittels der bajonettverschlußartigen Verbindung ein druckdichter Verschluß zwischen den genannten Teilen hergestellt. Bei abgenommenem Deckel 51 wird das Teesieb 41 in den Ziehbehälter 34 eingesetzt und anschließend werden die Teeblätter auf den Boden 42 des Teesiebes 41 gebracht. Danach erfolgt ein Verschließen der oberen Öffnung des Ziehbehälters 34 durch den Deckel 51. Danach erfolgt die Inbetriebnahme der beiden Heizungen 22 und 23. Durch diese wird das im Aufnahmebehälter 17 eingefüllte Wasser auf Siedetemperatur gebracht. Der erste entstehende Dampf kann durch die Öffnung 32 im Steigrohr 30 entweichen.

Das Wasser des Aufnahmebehälters 17 wird durch den dort entstehenden Überdruck im Steigrohr 30 nach oben getrieben und hebt bei grosser Strömungsgeschwindigkeit das Teesieb 41 an, wodurch ein ungehinderter Füllgang gewährleistet ist. Der obere Aufnahmeraum 18 des Aufnahmebehälters 17 wird bis zur Unterkante 31 des Steigrohres 31 entleert. Die von der I. Heizung 22 abgegebene Wärme wird nun nicht mehr abgeführt, d.h. die Temperatur steigt im Aufnahmebehälter an, so daß der Thermostat 25 die stärkere Heizung 22 abgeschaltet. Der in dem oberen Aufnahmeraum 18 herrschende Überdruck bleibt jedoch so lange erhalten, wie die II. Heizung 23 die Restwassermenge im unteren Aufnahmeraum 19 verdampft. Dies bedeutet, daß über die im unteren Aufnahmeraum 19 befindliche Restwassermenge die Ziehzeit einstellbar ist.

Der Wasserdampf kondensiert in dem Teesud, so daß die zunächst fehlende Wassermenge allmählich aufgefüllt wird. Die dabei freiwerdende Energie wirkt einem Temperaturabfall entgegen. Außerdem fördern die auftretenden Turbulenzen die Ausnutzung der auf dem Boden 22 des Teesiebes 41 aufgebrachten Teeblätter.

Nachdem in dem Aufnahmebehälter 17 die gesamte Wassermenge verdampft ist, bildet sich in dem Aufnahmebehälter 17 ein Unterdruck, der den zubereiteten Tee aus dem Ziehbehälter 34 zurücksaugt. Dabei bleiben die Teeblätter im Teesieb 41 hängen.

Gegebenenfalls kann auch die II. Heizung 23 mit einem weiteren Thermostaten zusammenwirken. Auf den Einsatz dieses Thermostaten ist in dem zeichnerisch dargestellten Ausführungsbeispiel verzichtet.

Der fertige Tee kann nun wahlweise, nachdem der Ziehbehälter 34 entfernt werden kann, direkt ausdem Aufnahmeraum 17 serviert werden oder zunächst in eine separate Servierkanne umgefüllt werden. Es wäre ferner denkbar, den Tee unter Benutzung eines Hahnes aus dem Aufnahmeraum 17 in Tassen abzufüllen, ähnlich wie dies bei dem bekannten Samowar geschieht.

Nachzutragen bleibt noch, daß der Deckel 51 des Ziehbehälters 34 bei Bedarf auch zum Verschließen der oberen Öffnung des gehäuses 11 des Teeautomaten 10 benutzt werden kann.

Wie bereits erwähnt, ist die dargestellte Ausführung nur eine beispielsweise Verwirklichung der Erfindung und diese nicht darauf beschränkt. Vielmehr sind noch mancherlei andere Ausführungen und Anwendungen möglich. So kann das Steigrohr 30 eine andere als die dargestellte Ausbildung erhalten und mit anderen Mitteln als dem dargestellten Halte- und Dichtungsring 49 festgelegt werden. Auch ist es für die Erfindung nicht unbedingt erforderlich, daß die beiden Aufnahmeräume 18 und 19 des Aufnahmebehälters 17 einen unterschiedlichen Durchmesser erhalten. Im Grenzfall könnten die Durchmesser der beiden Aufnahmeräume 18 und 19 auch untereinander gleich sein. Die dargestellte Ausführung hat jedoch den Vorteil, daß in dem unteren Aufnahmeraum 19 eine volumenmäßig relativ geringe Wassermenge zurückbleibt, was den Vorteil hat, daß sich die Ziehzeit genauer einstellen läßt als wenn eine größere Wassermenge als Restwassermenge zu verdampfen wäre. Im dargestellten Ausführungsbeispiel wird das Steigrohr 30 zugleich auch als Abflußeinrichtung benutzt, d.h. nach Beendigung der Ziehzeit fließt der fertige Tee aus dem Ziehbehälter 34 durch das Steigrohr 30 in den Aufnahmeraum 17 zurück. Gewünschtenfalls kann man hier auch eine zusätzliche Einrichtung einsetzen, um den fertig zubereiteten Tee direkt aus dem Ziehbehälter 34 zu entfernen.

Bezugszeichenliste :

10 - Teeautomat (Haushaltgerät zum Bereiten von Tee)
11 - Gehäuse
12 - Handgriff (von 11)
13 - Boden (von 11)
14 - Aufstellelement
15 - Verschlußplatte (in 13)
16 - Zwischenboden
17 - Aufnahmebehälter
18 - oberer Aufnahmeraum (von 17)
19 - unterer Aufnahmeraum (von 17)
20 - Begrenzungswandungen (von 19)
21 - Halteklammer
22 - I. Heizung (stark)
23 - II- Heizung (Schwach)
24 - Brandsicherung
25 - Thermostat
26 - Stift (an 25)
27 - Feder (für 25)
28 - Betätiger
29 - Lagerstift

30 - Steigrohr
31 - Unterkante (von 30)
32 - Öffnung (in 30)
33 - Oberkante (von 30)
34 - Ziehbehälter
35 - Boden (von 34)
36 - aufrechter Rohrabschnitt (an 35)
37 - Befestigungsbereich (an 34)
38 - Vorsprung
39 - Gegenvorsprung
40 - Dichtung
41 - Teesieb
42 - Boden (von 41)
43 - Löcher (in 42)
44 - Rand (von 42)
45 - Hülse (von 41)
46 - obere Abschlußwand (von 45)
47 - Rücksprung
48 - Skala (von 30)
49 - Halte- und Dichtungsring
50 - Handgriff (von 34)
51 - Deckel (von 34)
52 - Ausgußöffnung (von 51)
53 - Handhabe (von 51)
54 - Befestigungsrand (an 51)
55 - Ringspalt

## Ansprüche

1. Haushaltgerät zum Bereiten von Tee mit einem wenigstens eine Heizeinrichtung aufweisenden, mit einem Deckel versehenen Aufnahmebehälter für Frischwasser und mit einem Ziehbehälter, der eine Aufnahme für den Tee aufweist und durch einen weiteren Deckel verschließbar ist, wobei Aufnahmebehälter und Ziehbehälter durch ein Steigrohr miteinander verbunden sind und mit einer Abflußeinrichtung für den fertig zubereiteten Tee,
**dadurch gekennzeichnet,**
daß das Steigrohr (30) zwischen dem Aufnahmebehälter (17) und dem Ziehbehälter (34) verschiebbar angeordnet ist und daß im Aufnahmebehälter (17) in Abhängigkeit von der Lage der Unterkante 31 des Steigrohres (30) zum Boden des Aufnahmebehälters (17) eine unterschiedliche Restmenge von Wasser verbleibt, deren Verdampfzeit die Ziehzeit des zu bereitenden Tees bestimmt und daß das Steigrohr (30) vorzugsweise zugleich die Abflußeinrichtung bildet.

2. Haushaltgerät nach Anspruch 1, dadurch gekennzeichnet, daß das Steigrohr (30) in einem beidseitig offenen Rohrabschnitt (36) des Bodens (35) des Ziehbehälters (34) verschiebbar gelagert ist.

3. Haushaltgerät nach Anspruch 1 und 2, dadurch gekennzeichnet, daß das Steigrohr (30) unter Zwischenschaltung eines Halte- und Dichtringes (49) an den Innenwandungen des Rohrabschnittes (36) verschiebbar gelagert ist.

4. Haushaltgerät nach einem oder mehreren der vorangehenden Ansprüche, dadurch gekennzeichnet, daß das obere Ende des Steigrohres (30) in eine Hülse (45) des im Ziehbehälter (34) herausnehmbar angeordneten Teesiebes (41) eingreift.

5. Haushaltgerät nach Anspruch 4, dadurch gekennzeichnet, daß die Hülse (45) eine obere Abschlußwand (46) aufweist und mit ihrem rückwärtigen erweiterten Bereich den aufrechten Rohrabschnitt (36) des Teesiebes (41) unter Freilassung eines Ringspaltes (55) umgreift.

6. Haushaltgerät nach einem oder mehreren der vorangehenden Ansprüche, dadurch gekennzeichnet, daß die Oberkante (33) des Steigrohres (30) der Abschlußwand (46) der Hülse (45) benachbart ist und daß das Steigrohr (30) eine innerhalb des Aufnahmebehälters (17) liegende Öffnung (32) in ihrer Umfangswand hat.

7. Haushaltgerät nach Anspruch 1 und 4, dadurch gekennzeichnet, daß die Hülse (45) des Teesiebes (41) im Bereich des Bodens (35) des Ziehbehälters (34) einen senkrecht zur Hülse (45) angeordneten und mit einer Vielzahl von Löchern (43) versehenen Boden (42) aufweist, der unter Bildung eines Aufnahmeraumes in einen abgewinkelten, umlaufenden Rand (44) übergeht.

8. Haushaltgerät nach Anspruch 1, dadurch gekennzeichnet, daß der Boden (35) des Ziehbehälters (34) zugleich den Deckel für den Aufnahmebehälter (17) bildet.

9. Haushaltgerät nach Anspruch 8, dadurch gekennzeichnet, daß der Boden (35) des Ziehbehälters (3 ) einen angeformten Befestigungsbereich (37) aufweist, der einen Vorsprung (38) umfaßt, der mit einem Gegenvorsprung (39) des Gehäuses (11) des Haushaltgerätes (10) bejonettverschlußartig zusammenwirkt.

10. Haushaltgerät nach Anspruch 1, dadurch gekennzeichnet, daß der Aufnahmebehälter (17) einen sich aus einem oberen (18) und unteren (19) Bereich zusammensetzenden Aufnahmeraum aufweist und daß die im unteren Aufnahmeraum (19) verbleibende Restmenge des zu verdampfenden Wassers die Ziehzeit des Tees bestimmt.

11. Haushaltgerät nach Anspruch 1 und 10, dadurch gekennzeichnet, daß der obere Aufnahmeraum (18) einen Durchmesser aufweist, der etwa dem des Gehäuses (11) des Haushaltgerätes entspricht, während der untere, zentral im Gehäuse (11) liegende Aufnahmeraum (19) durchmessermäßig um ein Vielfaches kleiner ist und unterhalb des Bodens des Aufnahmeraumes (18) liegt.

12. Haushaltgerät nach Anspruch 10 und 11, dadurch gekennzeichnet, daß jedem Aufnahmeraum (18 bzw. 19) eine separate Heizung (22 bzw. 23) zugeordnet ist und daß die dem oberen Aufnahmeraum (18) zugeordnete Heizung (22) eine um ein Vielfaches höhere Leistung als die dem unteren Aufnahmeraum (19) zugeordnete Heizung (23) hat.

13. Haushaltgerät nach den Ansprüchen 11 und 12, dadurch gekennzeichnet, daß wenigstens der Heizung (22) ein wiedereinrückbarer Thermostat (25) zugeordnet ist.

0 292 649

Fa. Robert Krups Stiftung & Co.KG

Europäisches Patentamt

**EUROPÄISCHER RECHERCHENBERICHT**

Nummer der Anmeldung

EP 88 10 2908

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | US-A-2 856 844 (PRICE) <br> * Insgesamt * <br> --- | 1 | A 47 J 31/047 |
| Y | NL-A-7 105 977 (N.V. PHILIPS) <br> * Seite 4, Zeilen 5-20; Seite 5, Zeilen 5-22; Seite 6, Zeilen 19-26; Figuren 1,2 * <br> --- | 1 | |
| A | GB-A- 879 732 (TERSERAM) <br> --- | | |
| A | US-A-2 312 555 (JEPSON) <br> --- | | |
| A | US-A-1 994 323 (PEIRCE) <br> --- | | |
| A | FR-A- 663 218 (PROD'HOM) <br> --- | | |
| A | FR-A- 606 614 (DARRICARRERE) <br> ----- | | |

**RECHERCHIERTE SACHGEBIETE (Int. Cl.4)**

A 47 J

Der vorliegende Recherchenbericht wurde für alle Patentansprüche erstellt

| Recherchenort | Abschlußdatum der Recherche | Prüfer |
|---|---|---|
| DEN HAAG | 29-08-1988 | SCHARTZ J. |